(19) Europäisches Patentamt
European Patent Office
Office européen des brevets

(11) **EP 4 645 507 A1**

(12) **EUROPEAN PATENT APPLICATION**
published in accordance with Art. 153(4) EPC

(43) Date of publication:
05.11.2025 Bulletin 2025/45

(21) Application number: 23909376.8

(22) Date of filing: 20.09.2023

(51) International Patent Classification (IPC):
*H01M 10/0585* (2010.01)    *H01M 10/0525* (2010.01)
*H01M 10/054* (2010.01)

(52) Cooperative Patent Classification (CPC):
**H01M 4/13; H01M 10/0525; H01M 10/054;**
**H01M 10/0585;** Y02E 60/10

(86) International application number:
**PCT/CN2023/120064**

(87) International publication number:
**WO 2024/139441 (04.07.2024 Gazette 2024/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: 30.12.2022 CN 202223577445 U

(71) Applicant: **BYD Company Limited**
**Shenzhen, Guangdong 518118 (CN)**

(72) Inventors:
• **YIN, Xiaoqiang**
**Shenzhen, Guangdong 518118 (CN)**

• **LIU, Ping**
**Shenzhen, Guangdong 518118 (CN)**
• **LI, Xiangyu**
**Shenzhen, Guangdong 518118 (CN)**
• **SUN, Tiancheng**
**Shenzhen, Guangdong 518118 (CN)**
• **LIU, Shifa**
**Shenzhen, Guangdong 518118 (CN)**

(74) Representative: **Mathys & Squire**
**The Shard**
**32 London Bridge Street**
**London SE1 9SG (GB)**

(54) **SECONDARY BATTERY**

(57) A secondary battery, comprising a positive electrode layer, a negative electrode layer and an insulating layer. The insulating layer is located between the positive electrode layer and the negative electrode layer; the thickness of the positive electrode layer is 10 to 200 mm; the thickness of the negative electrode layer is 5 to 150 mm; the secondary battery meets the following condition: $20\% \leq a-(b/20) \times 5\% \leq 35\%$; the porosity of the insulating layer is a; and the thickness of the positive electrode layer is b mm. According to the secondary battery, the impedance of the secondary battery can be obviously reduced, and the capacity retention rate of the battery is increased in the long-term cycle process.

FIG. 1

Description

## CROSS-REFERENCE TO RELATED APPLICATIONS

The application claims priority to Chinese Patent Application filed with the China National Intellectual Property Administration on December 30, 2022, with the application number 202223577445.5 and the application title "A Secondary Battery", the entire content of which is incorporated herein by reference.

## FIELD

The application relates to the field of battery technology, and in particular, to a secondary battery.

## BACKGROUND

Compared with the mainstream existing energy storage technology pumped-storage hydroelectricity, the cost per unit of electricity of lithium-ion batteries is relatively high, which greatly restricts their further adoption. In reducing cost of lithium-ion batteries, an important direction is to design thicker electrodes and batteries to reduce the use of unnecessary auxiliary materials, such as excessive foil, separator paper, housing, and electrolyte, in order to achieve the goal of reducing the cost of battery cells. This approach is also conducive to increasing the proportion of active materials in the battery, thereby improving the energy density.

In the design of thick electrodes and batteries, the increase in electrode thickness can affect the diffusion efficiency of internal electrolyte ions between the positive and negative electrodes, increasing the diffusion resistance of the electrolyte ions. This, in turn, leads to an increase in the internal resistance of the battery, resulting in lower charging and discharging efficiency. How to reduce the resistance brought by the increased thickness of the electrode module to the internal lithium-ion conduction is crucial for achieving reasonable battery performance.

## SUMMARY

In response to the existing issue of high internal resistance in thick-electrode batteries, which affects charging and discharging efficiency, this application provides a secondary battery.

The technical solution adopted by this application to solve the above-mentioned technical problem is as follows: The application provides a secondary battery, including:

a positive electrode layer, the positive electrode layer with a thickness ranging from 10 to 200 mm;
a negative electrode layer, the negative electrode layer with a thickness ranging from 5 to 150 mm; and
an insulating layer, the insulating layer located between the positive electrode layer and the negative electrode layer; the secondary battery meets the following condition:

$$20\% \leqslant a-(b/20) \times 5\% \leqslant 35\%$$

wherein a is the porosity of the insulating layer; and
b is the thickness of the positive electrode layer in mm.

In some of the embodiments, the secondary battery meets the following condition:

$$25\% \leqslant a-(b/20) \times 5\% \leqslant 30\%.$$

In some of the embodiments, the a is 20% to 85%.

In some of the embodiments, the thickness ratio between the positive electrode layer and the negative electrode layer is (1 to 2.5) : 1.

In some of the embodiments, the thickness of the insulating layer is 2 to 10mm.

In some of the embodiments, the insulating layer is selected from an insulating filler layer, a porous membrane or a porous block.

In some of the embodiments, the insulating filler layer is selected from $Al_2O_3$ powder layer, AlO(OH) powder layer, $SiO_2$ powder layer, PVDF powder layer or PTFE powder layer; and the porous membrane is selected from PP membrane, PE membrane, PET membrane, PAN membrane or fiber glass membrane; and the porous block is selected from porous PE block, porous PVDF block or porous PTFE block.

In some of the embodiments, the positive electrode layer includes a positive electrode material and a positive electrode current collector embedded in the positive electrode material, and the negative electrode layer includes a negative electrode material and a negative electrode current collector embedded in the negative electrode material.

In some of the embodiments, the positive electrode current collector and the negative electrode current collector are independently selected from a linear structure, a planar network structure or a three-dimensional network structure.

In some of the embodiments, a plurality of positive electrode layers, a plurality of negative electrode layers, a plurality of the insulating layers are provided, the plurality of positive electrode layers, the plurality of insulation electrode layers and the plurality of negative electrode layers are arranged in a stacked configuration, and the plurality of electrode positive layers and the plurality of negative electrode layers are alternately arranged, with the insulating layer arranged between each adjacent positive electrode layer and negative electrode layer.

In some of the embodiments, the porosity of the positive electrode layer is 30% to 80%, and the porosity of the negative electrode layer is 30% to 80%.

In some of the embodiments, the porosity of the positive electrode layer gradually increases from the inner core to the outer surface of the positive electrode layer; and the porosity of the negative electrode layer gradually increases from the inner core to the outer surface of the negative electrode layer.

In some of the embodiments, the secondary battery further includes a housing in which the positive electrode layer, the negative electrode layer and the insulating layer are located.

In some of the embodiments, the housing is a metal housing and an insulating lining layer is arranged on the inner wall of the housing.

In some of the embodiments, the secondary battery further includes a positive electrode current collector terminal and a negative electrode current collector terminal, and the positive electrode current collector terminal is connected to the positive electrode current collector and leads to the outside of the housing, and the negative electrode current collector terminal is connected to the negative electrode current collector and leads to the outside of the housing.

In some of the embodiments, the secondary battery is a lithium-ion battery or a sodium-ion battery.

According to the secondary battery provided by this invention, an ultra-thick electrode battery comprises a positive electrode layer with a thickness of 10 to 200mm and a negative electrode layer with a thickness of 5 to 150mm, in order to increase the energy density of the secondary battery and reduce the use of unnecessary auxiliary materials. Meanwhile, aiming to address the issue of increased internal resistance caused by thick electrodes, the inventors conducted experiments on the positive electrode layer and the insulating layer and found that the porosity a of the insulating layer and the thickness b of the positive electrode layer have an interactive effect on the diffusion of electrolyte ions. Specifically, when the porosity a of the insulating layer and the thickness b of the positive electrode layer meet the condition $20\% \leq a-(b/20) \times 5\% \leq 35\%$, the impedance of the secondary battery can be significantly reduced, and the battery capacity retention rate can be improved during long-term cycling. It is speculated that under the above conditions, the porosity of the insulating layer is well-matched with the thickness of the positive electrode layer, which is conducive to improving the efficiency of electrolyte ion intercalation and deintercalation in the positive electrode layer, as well as the ion shuttling efficiency in the insulating layer. This, in turn, meets the electrolyte migration requirements for positive electrode layers of different thicknesses, thereby enhancing the rate performance and charging-discharging efficiency of the secondary battery.

## BRIEF DESCRIPTION OF THE DRAWINGS

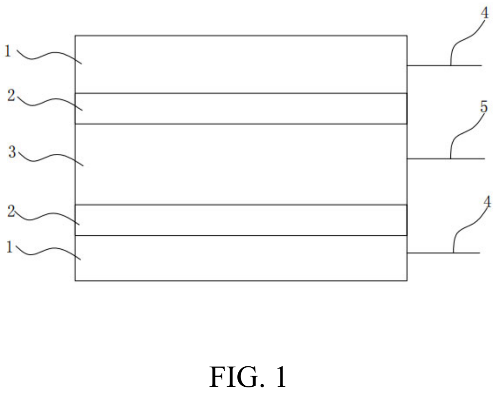

FIG. 1 is a structural diagram of the secondary battery provided by this application.

The reference numerals in the drawings of the specification are as follows:

1. negative electrode layer; 2. insulating layer; 3. positive electrode layer; 4. negative electrode current collector terminal; 5. positive electrode current collector terminal.

## DETAILED DESCRIPTION

In order to make the technical problems, technical solutions, and beneficial effects addressed by this application clearer and more understandable, the following is a detailed description of this application in conjunction with the accompanying drawings and embodiments. It should be understood that the specific embodiments described here are merely for the purpose of explaining this application and are not intended to limit it.

In the description of this application, the term "thickness" refers to the distance between the two surfaces with the largest area of a layered structure. In this application, the positive electrode layer, the insulating layer, and the negative electrode layer are stacked along their thickness direction.

As shown in Figure 1, an embodiment of this application provides a secondary battery, which includes a positive electrode layer 3, a negative electrode layer 1, and an insulating layer 2. The insulating layer 2 is located between the positive electrode layer 3 and the negative electrode layer 1. The thickness of the positive electrode layer 3 is 10 to 200mm, and the thickness of the negative electrode layer 1 is 5 to 150mm. The secondary battery meets the following conditions:

$$20\% \leqslant a-(b/20)\times 5\% \leqslant 35\%$$

wherein a is the porosity of the insulating layer; and
b is the thickness of the positive electrode layer in mm.

According to the secondary battery provided by this invention, an ultra-thick electrode battery comprises a positive electrode layer 3 with a thickness of 10 to 200mm and a negative electrode layer 1 with a thickness of 5 to 150mm, in order to increase the energy density of the secondary battery and reduce the use of unnecessary auxiliary materials. Meanwhile, aiming to address the issue of increased internal resistance caused by thick electrodes, the inventors conducted experiments on the positive electrode layer 3 and the insulating layer 2 and found that the porosity a of the insulating layer 2 and the thickness b of the positive electrode layer 3 have an interactive effect on the diffusion of electrolyte ions. Specifically, when the porosity a of the insulating layer 2 and the thickness b of the positive electrode layer 3 meet the condition $20\% \leq a-(b/20)\times 5\% \leq 35\%$, the impedance of the secondary battery can be significantly reduced, and the battery capacity retention rate can be improved during long-term cycling. It is speculated that under the above conditions, the porosity of the insulating layer 2 is well-matched with the thickness of the positive electrode layer 3, which is conducive to improving the efficiency of electrolyte ion intercalation and deintercalation in the positive electrode layer 3, as well as the ion shuttling efficiency in the insulating layer 2. This, in turn, meets the electrolyte migration requirements for positive electrode layers 3 of different thicknesses, thereby enhancing the rate performance and charging-discharging efficiency of the secondary battery.

In some of the embodiments, the secondary battery meets the following condition:

$$25\% \leqslant a-(b/20)\times 5\% \leqslant 30\%.$$

By further restricting the range of the expressions as above, it is conducive to further alleviating the problem of increased electrolyte conduction impedance caused by electrode thickening, thereby achieving better capacity performance at low rates.

In some of the embodiments, the thickness of the positive electrode layers 3 can be 10mm, 20mm, 30mm, 40mm, 50mm, 60mm, 70mm, 80mm, 90mm, 100mm, 110mm, 120mm, 130mm, 140mm, 150mm, 170mm, 190mm, or 200mm.

As the thickness of the positive electrode layer 3 increases, it is beneficial for improving the energy density of the battery. Meanwhile, the diffusion efficiency of electrolyte ions within the positive electrode layer 3 decreases. Therefore, it is necessary to adjust the porosity of the insulating layer 2 to comprehensively regulate the battery performance. Nevertheless, if the thickness of the positive electrode layer 3 is too large, it becomes difficult to reverse its impact on the increase in battery impedance through other factors. When the thickness of the positive electrode layer 3 is within the aforementioned range, on the one hand, it enhances the energy density of the secondary battery; on the other hand, it is also conducive to ensuring that the impedance of the secondary battery is within an appropriate range by coordinating with the porosity of the insulating layer 2.

When the thickness of the negative electrode layer 1 is within the aforementioned range, it is conducive to coordinating with the positive electrode layer 3 to regulate the ratio of the reversible capacity of the negative electrode and that of the positive electrode, enabling the secondary battery to have an appropriate NP ratio. This is beneficial for ensuring the energy density of the secondary battery while guaranteeing the uniform deposition of electrolyte ions inside the negative electrode layer 1, thereby enhancing the safety performance of the battery.

In some of the embodiments, the a is 25% to 85%, that is, the porosity of the insulating layer 2 is 25% to 85%.

Specifically, the porosity of the insulating layer 2 can be 25%, 35%, 45%, 55%, 65%, 75%, or 85%.

When the porosity of the insulating layer 2 is within the aforementioned range, it can suppress the occurrence of side reactions between the positive and negative electrodes. At the same time, it improves the shuttling efficiency of electrolyte ions within the insulating layer 2. This is conducive to reducing battery impedance while ensuring the cycling performance of the battery, and to enhancing the capacity retention rate of the battery.

In some of the embodiments, the thickness ratio of the positive electrode layer 3 to the negative electrode layer 1 is (1 to 2.5):1.

In some of the embodiments, the thickness ratio of the positive electrode layer 3 to the negative electrode layer 1 can be 1:1, 1.2:1, 1.5:1, 1.6:1, 1.7:1, 1.8:1, 1.9:1, 2.0:1, 2.1:1, 2.2:1, 2.3:1, 2.4:1 or 2.5:1.

By adjusting the thickness ratio of the positive electrode layer 3 to the negative electrode layer 1, the capacities of the positive electrode layer 3 and the negative electrode layer 1 can be regulated to be within an appropriate range. When the thickness ratio of the positive electrode layer 3 to the negative electrode layer 1 is within the aforementioned range, it is conducive to ensuring the full utilization of the capacities of both the positive electrode layer 3 and the negative electrode layer 1. At the same time, it helps to prevent the formation of metal dendrites.

In some of the embodiments, the thickness of the insulating layer 2 is 2 to 10mm.

In some of the embodiments, the thickness of the insulating layer 2 can be 2mm, 4mm, 6mm, 8mm or 10mm.

The thickness of the insulating layer 2 is related to the risk of short-circuiting in the battery and the shuttling efficiency of electrolyte ions. When the thickness of the insulating layer 2 is within the aforementioned range, it can effectively prevent the risk of contact between the positive electrode layer 3 and the negative electrode layer 1, and at the same time facilitate the shuttling of electrolyte ions.

In some of the embodiments, the insulating layer 2 is selected from an insulating filler layer, a porous membrane or a porous block.

The insulating filler layer is a layer of insulating powder accumulation. When the insulating layer 2 is selected from the insulating filler layer, it is only necessary to fill the insulating powder in the housing to obtain the insulating filler layer, which has the advantage of convenient operation.

When the insulating layer 2 is selected from the porous membrane, it has a relatively high ionic conductivity efficiency.

The porous block is an insulating block with a porous structure. When the insulating layer 2 is selected from the porous block, it has better structural strength, which is conducive to enhancing the puncture resistance of the insulating layer 2 and thereby improving the safety of the secondary battery.

In some of the embodiments, the insulating filler layer is selected from $Al_2O_3$ powder layer, $AlO(OH)$ powder layer, $SiO_2$ powder layer, PVDF powder layer or PTFE powder layer; and the porous membrane is selected from PP membrane, PE membrane, PET membrane, PAN membrane or fiber glass membrane; and the porous block is selected from porous PE block, porous PVDF block or porous PTFE block.

In some of the embodiments, the positive electrode layer 3 includes a positive electrode material and a positive electrode current collector embedded in the positive electrode material.

The positive electrode current collector is used for the collection and conduction of electrons from the positive electrode material. By embedding the positive electrode current collector into the positive electrode material, the contact area between the positive electrode material and the positive electrode current collector is increased, thereby reducing the electronic conduction impedance.

The positive electrode material includes a positive electrode active substance, a positive electrode binder, and a positive electrode conductive agent. The positive electrode active substance can be a lithium-ion battery positive electrode material or a sodium-ion battery positive electrode material. The lithium-ion battery positive electrode materials include one or more of the following: $LiFePO_4$, $LiFe_xMn_{1-x}PO_4(0 \leq x \leq 1)$, $LiNi_xCo_yMn_{1-x-y}O_2(0 \leq x \leq 1, 0 \leq y \leq 1)$, $LiNi_xCo_yAl_{1-x-y}O_2$ $(0 \leq x \leq 1, 0 \leq y \leq 1)$, $LiNi_xCo_yMn_zAl_{1-x-y-z}O_2(0 \leq x \leq 1, 0 \leq y \leq 1, 0 \leq z \leq 1)$, $LiMn_2O_4$, $LiMnO_2$, $LiNiO_2$, $LiCoO_2$, $Li_2MnO_3$, $LiNi_{0.5}Mn_{1.5}O_2$. The sodium-ion battery positive electrode materials include one or more of the following: Prussian white, $NaNi_xFe_yMn_{1-x-y}O_2(0 \leq x \leq 1, 0 \leq y \leq 1)$, $Na_3V_2(PO_4)_3$, $Na_2FeP_2O_7$, $Na_2Fe_2(SO_4)_3$. The positive electrode binders include one or more of the following: PVDF, PTFE, PEO. The positive electrode conductive agents include one or more of the following: graphite powder, carbon black, carbon nanotubes, graphene, polypyrrole, polyaniline, polythiophene.

In some of the embodiments, the negative electrode layer includes a negative electrode material and a negative electrode current collector embedded in the negative electrode material.

The negative electrode current collector is used for the collection and conduction of electrons from the negative electrode material. By embedding the negative electrode current collector into the negative electrode material, the contact area between the negative electrode material and the negative electrode current collector is increased, thereby reducing the electronic conduction impedance.

The negative electrode material includes a negative electrode active substance, a negative electrode binder, and a negative electrode conductive agent. The negative electrode active substances include one or more of the following: graphite, hard carbon, silicon, silicon monoxide, $Li_4Ti_5O_{12}$, $TiO_2$, $Fe_2O_3$, $MoS_2$. The negative electrode binders include one or more of the following: methylcellulose, styrene-butadiene rubber, polyacrylic acid, sodium alginate, polyimide, polyvinyl alcohol. The negative electrode conductive agents include one or more of the following: conductive graphite, Super P, carbon black, carbon nanotubes, graphene.

In some of the embodiments, the functional fillers can be optionally added to the positive electrode material and the negative electrode material. The functional fillers include conductive fillers and/or insulating fillers. The conductive fillers include one or more of the following: conductive carbon fibers, conductive carbon rods, and conductive carbon tubes. The insulating fillers include one or more of the following: fiber glass, $Al_2O_3$, and $SiO_2$.

In some of the embodiments, the positive electrode current collector and the negative electrode current collector are independently selected from a linear structure, a planar network structure or a three-dimensional network structure.

In some of the embodiments, the positive electrode current collector and the negative electrode current collector are independently selected from a planar network structure or a three-dimensional network structure.

Using planar network structures or three-dimensional network structures as the positive electrode current collector or the negative electrode current collector is beneficial for increasing the contact area between the positive electrode current collector and the positive electrode material, or between the negative electrode current collector and the negative electrode material, thereby reducing the interfacial electronic conduction impedance.

The positive electrode current collector and the negative electrode current collector are each independently selected from one or more of the following: Cu, Al, Ni, Fe, Mn, Ti, and conductive fibers.

In one embodiment, the positive electrode current collector is selected from Al, the negative electrode current collector is selected from Cu.

In some of the embodiments, a plurality of positive electrode layers 3, a plurality of negative electrode layers 1 and a plurality of insulating layers 2 are provided, the plurality of positive electrode layers 3, the plurality of insulation electrode layers 2 and the plurality of negative electrode layers 1 are arranged in a stacked configuration, and the plurality of positive electrode layers 3 and the plurality of electrode negative layers 1 are alternately arranged, with the insulating layer 2 arranged between each adjacent positive electrode layer 3 and negative electrode layer 1.

Arranging the positive electrode layer 3, the negative electrode layer 1, and the insulating layer 2 into a multilayer structure is conducive to improving the spatial utilization rate of the secondary battery, enhancing the overall energy density, and further reducing the use of non-essential auxiliary materials.

In other embodiments, the positive electrode layer 3, the negative electrode layer 1 and the insulating layer 2 can also be a single layer.

In some of the embodiments, the porosity of the positive electrode layer 3 is 30% to 80%, and the porosity of the negative electrode layer 1 is 30% to 80%.

In some of the embodiments, the porosity of the positive electrode layer 3 is 30% to 60%, and the porosity of the negative electrode layer 1 is 30% to 60%.

When the porosity of the positive electrode layer 3 and the porosity of the negative electrode layer 1 are within the aforementioned range, on the one hand, it is conducive to improving the penetration efficiency of the electrolyte into the positive electrode layer 3 and the negative electrode layer 1, thereby enhancing the ionic conductivity. On the other hand, it ensures that the positive electrode layer 3 and the negative electrode layer 1 have a certain degree of structural strength, maintaining the structural stability of the positive electrode layer 3 and the negative electrode layer 1 during charge-discharge cycling.

In some of the embodiments, the porosity of the positive electrode layer 3 gradually increases from the inner core to the outer surface of the positive electrode layer 3; and the porosity of the negative electrode layer 1 gradually increases from the inner core to the outer surface of the negative electrode layer 1.

Setting the porosity of the positive electrode layer 3 and the negative electrode layer 1 to gradually increase from the inside to the outside is conducive to enhancing the infiltration effect of the electrolyte on the positive electrode layer 3 and the negative electrode layer 1, thereby improving the ionic conductivity.

In some of the embodiments, the secondary battery further includes a housing in which the positive electrode layer 3, the negative electrode layer 1 and the insulating layer 2 are located.

In some of the embodiments, the housing can be a metallic housing or an insulating housing. The metallic housing includes Fe, Al, and their alloy components, as well as plated or composite parts. The insulating housing includes one or more of the following: PE, PP, PTFE, PET, and PAN.

In some of the embodiments, the housing is a metal housing and an insulating lining layer is arranged on the inner wall of the housing.

The thickness of the housing is 5mm to 100mm, and the thickness of the insulating lining layer is 1mm to 10mm.

The insulating lining layer is used to prevent direct contact between the housing and the negative electrode layer 1 or the positive electrode layer 3, thereby avoiding the issue of housing short circuit.

The housing includes a cover plate and a shell with an opening, where the cover plate is used to seal the opening of the shell.

In some of the embodiments, the secondary battery further comprises a positive electrode current collector terminal 5 and a negative electrode current collector terminal 4, and the positive electrode current collector terminal 5 is connected to the positive electrode current collector and leads to the outside of the housing, and the negative electrode current collector terminal 4 is connected to the negative electrode current collector and leads to the outside of the housing.

By directly leading out the positive electrode current collector terminal 5 and the negative electrode current collector terminal 4 from the housing, the arrangement of a current collection structure in the housing can be avoided, thereby enhancing the energy density of the secondary battery.

In one embodiment, the positive electrode current collector terminal 5 is an aluminum rod with a diameter of 5 to 100 mm. When a plurality of the positive electrode layers 3 are provided, the plurality of positive electrode layers 3 lead out a plurality of positive electrode current collector terminals 5, and the plurality of positive electrode current collector terminals 5 form an aluminum rod array. The negative electrode current collector terminal 4 is a copper rod with a diameter of 5 to 50 mm. When a plurality of the negative electrode layers 1 are provided, the plurality of negative electrode layers 1 lead out a plurality of negative electrode current collector terminals 4, and the plurality of negative electrode current collector terminals 4 form a copper rod array. The positive electrode current collector terminals 5 and the negative electrode current collector terminals 4 are led out from opposite sides of the housing.

In some of the embodiments, the secondary battery is a lithium-ion battery or a sodium-ion battery.

The following further illustrates the present application through embodiments.

Table 1

| Number | Thickness of Single-Layer Positive Electrode Layer b/mm | Porosity of Insulating Layer a | Thickness of Single-Layer Negative Electrode Layer /mm | Thickness Ratio of Positive Electrode Layer to Negative Electrode Layer | a-(-b/20)×5% |
|---|---|---|---|---|---|
| Embodiment 1 | 36.4 | 39.1% | 28.6 | 1.27 | 30.0% |
| Embodiment 2 | 65.1 | 45.2% | 51.2 | 1.27 | 28.9% |
| Embodiment 3 | 98.5 | 53.3% | 77.5 | 1.27 | 28.7% |
| Embodiment 4 | 142.2 | 64.8% | 112.1 | 1.27 | 29.3% |
| Embodiment 5 | 188.7 | 75.0% | 147.9 | 1.28 | 27.8% |
| Embodiment 6 | 200 | 70.0% | 155 | 1.29 | 20.0% |
| Embodiment 7 | 200 | 85.0% | 155 | 1.29 | 35.0% |
| Comparison Example 1 | 36.4 | 25.1% | 28.6 | 1.27 | 16.0% |
| Comparison Example 2 | 65.1 | 33.5% | 51.2 | 1.27 | 17.2% |
| Comparison Example 3 | 98.5 | 41.2% | 77.5 | 1.27 | 16.6% |
| Comparison Example 4 | 142.2 | 50.8% | 112.1 | 1.27 | 15.3% |
| Comparison Example 5 | 188.7 | 61.2% | 147.9 | 1.28 | 14.0% |
| Comparison Example 6 | 36.4 | 47.0% | 28.6 | 1.27 | 37.9% |
| Comparison Example 7 | 35 | 45.2% | 27 | 1.30 | 36.5% |

Embodiment 1

The embodiment is used to illustrate the secondary battery and its preparation method disclosed in the present invention, which includes the following steps:

①Lithium iron phosphate powder is mixed with conductive agent Super P and binder PVDF at a mass ratio of 90%:5%:5% using low-speed ball milling at a rotational speed of 50-100rpm to obtain positive electrode active powder. Artificial graphite powder is mixed with conductive agent carbon black and binder PVDF at a mass ratio of 95%:2%:3% using low-speed ball milling at a rotational speed of 50-100rpm to obtain negative electrode active powder. $Al_2O_3$ powder is mixed with the binder PVDF at a mass ratio of 95%:5% using low-speed ball milling at a rotational speed of 50-100rpm to obtain insulating layer powder. ②The positive and negative electrode active powders and the insulating powder are layered and filled into an iron housing with dimensions of 0.5m × 0.5m × 0.5m, which has been internally insulated, in the sequence of copper current collector mesh - negative electrode active powder - insulating powder - aluminum current collector mesh - positive electrode active powder. Negative electrode current collector is made of a three-dimensional copper mesh with a 1cm×1cm×1cm aperture size, woven from copper wires with a diameter of 0.5mm. Positive electrode current collector is made of a three-dimensional four-layer aluminum mesh with a 1cm×1cm×1cm aperture size, woven from aluminum wires with a diameter of 1mm. For each layer of negative electrode layer, 10kg of material is added, and after leveling, it is hot-pressed to a layer thickness of 28.6mm. For each layer of positive electrode layer, 20kg of material is added, and after leveling, it is hot-pressed to a layer thickness of 36.4mm. For each layer of insulating layer, 6.09kg of material is added, and after leveling, it is hot-pressed to a layer thickness of 10mm, with a porosity of 39.1%. The entire cell is consisted of 6 layers of negative electrodes, 5 layers of positive electrodes, and 10 layers of insulating layers. ③After the cell is formed, a cover plate is welded on, and then it is transferred to a vacuum oven at 105° C for baking for 5 days. ④After baking, the cell is filled with electrolyte. The electrolyte used is a conventional lithium iron phosphate electrolyte, with a filling volume of 63 kg. ⑤The cell is subjected to normal formation and capacity testing.

Embodiment 2 to Embodiment 7

Embodiments 2 to 7 are used to illustrate the secondary battery and its preparation method disclosed in the present invention, which include most of the operational steps in Embodiment 1, with the differences being:
The thickness of the positive electrode layer, the thickness of the negative electrode layer, and the porosity of the insulating layer are adopted as shown in Table 1, and the overall thickness of the cell is controlled to be the same as in Embodiment 1.

Comparison Example 1 to Comparison Example 7

Comparison Example 1 to 7 are used to illustrate the secondary battery and its preparation method disclosed in the present invention, which include most of the operational steps in Embodiment 1, with the differences being:
The thickness of the positive electrode layer, the thickness of the negative electrode layer, and the porosity of the insulating layer are adopted as shown in Table 1, and the overall thickness of the cell is controlled to be the same as in Embodiment 1.

Performance Testing

The following performance tests are conducted on the positive electrode plates prepared as described above:
An electrochemical charge-discharge testing cabinet is used to conduct simulated charge-discharge tests on the individual cells prepared as described above. Specifically, under ambient temperature conditions ($25\pm3°C$), a test current of 1000 A is applied, and simulated constant-current charge-discharge tests are performed within a voltage range of 2.0-3.65V to obtain the electrical performance data of the single cell.
The test results obtained are filled into Table 2.

Table 2

| Number | Average Discharge Voltage (V) | Discharge Capacity (Ah) |
| --- | --- | --- |
| Embodiment 1 | 3.130 | 11920 |
| Embodiment 2 | 3.128 | 12038 |
| Embodiment 3 | 3.127 | 12099 |
| Embodiment 4 | 3.125 | 12154 |
| Embodiment 5 | 3.123 | 12187 |
| Embodiment 6 | 3.121 | 12202 |
| Embodiment 7 | 3.125 | 12237 |
| Comparison Example 1 | 3.003 | 10927 |
| Comparison Example 2 | 3.001 | 11138 |
| Comparison Example 3 | 2.995 | 11212 |
| Comparison Example 4 | 2.992 | 11334 |
| Comparison Example 5 | 2.985 | 11501 |
| Comparison Example 6 | 3.122 | 10305 |
| Comparison Example 7 | 3.121 | 10298 |

As can be seen from the test results in Table 2, compared with secondary batteries outside the scope of the limitations of the present application, secondary batteries under the conditions provided by the present invention have higher discharge voltage and discharge capacity. This indicates that by appropriately adjusting the thickness of the positive electrode layer and the porosity of the insulating layer, it is possible to mitigate the increased mass transfer impedance caused by the thickening of the electrodes, thereby achieving comparable capacity performance at low rates.
The above description is merely an exemplary embodiment of the present application and is not intended to limit the present application. Any modifications, equivalent substitutions, and improvements made within the spirit and principles of the present application should all be included within the scope of protection of the present application.

**Claims**

1. A secondary battery, comprising:

   a positive electrode layer (3), the positive electrode layer (3) with a thickness ranging from 10 to 200 mm;
   a negative electrode layer (1), the negative electrode layer (1) with a thickness ranging from 5 to 150 mm; and
   an insulating layer (2), the insulating layer (2) located between the positive electrode layer (3) and the negative electrode layer (1);
   the secondary battery meets the following condition:

   $$20\% \leqslant a-(b/20)\times 5\% \leqslant 35\%$$

   wherein a is the porosity of the insulating layer (2); and
   b is the thickness of the positive electrode layer (3)in mm.

2. The secondary battery according to claim 1, wherein the secondary battery meets the following condition:

   $$25\% \leqslant a-(b/20)\times 5\% \leqslant 30\%.$$

3. The secondary battery according to claim 1, wherein the a is 20% to 85%.

4. The secondary battery according to claim 1, wherein the thickness ratio between the positive electrode layer (3) and the negative electrode layer (1) is (1 to 2.5) : 1.

5. The secondary battery according to claim 1, wherein the thickness of the insulating layer (2) is 2 to 10 mm.

6. The secondary battery according to claim 1, wherein the insulating layer (2) is selected from an insulating filler layer, a porous membrane or a porous block.

7. The secondary battery according to claim 6, wherein the insulating filler layer is selected from $Al_2O_3$ powder layer, AlO(OH) powder layer, $SiO_2$ powder layer, PVDF powder layer or PTFE powder layer; and the porous membrane is selected from PP membrane, PE membrane, PET membrane, PAN membrane or fiber glass membrane; and the porous block is selected from porous PE block, porous PVDF block or porous PTFE block.

8. The secondary battery according to claim 1, wherein the positive electrode layer (3) comprises a positive electrode material and a positive electrode current collector embedded in the positive electrode material, and the negative electrode layer (1) comprises a negative electrode material and a negative electrode current collector embedded in the negative electrode material.

9. The secondary battery according to claim 8, wherein the positive electrode current collector and the negative electrode current collector are independently selected from a linear structure, a planar network structure or a three-dimensional network structure.

10. The secondary battery according to claim 1, wherein a plurality of positive electrode layers (3), a plurality of negative electrode layers (1) and a plurality of insulating layers (2) are provided, the plurality of positive electrode layers (3), the plurality of insulation layers (2) and the plurality of negative electrode layers (1) are arranged in a stacked configuration, and the plurality of positive electrode layers (3) and the plurality of negative electrode layers (1) are alternately arranged, with the insulating layer (2) arranged between each adjacent positive electrode layer (3) and negative electrode layer (1).

11. The secondary battery according to claim 1, wherein the porosity of the positive electrode layer (3) is 30% to 80%, and the porosity of the negative electrode layer (1) is 30% to 80%.

12. The secondary battery according to claim 1, wherein the porosity of the positive electrode layer (3) gradually increases from the inner core to the outer surface of the positive electrode layer (3); and the porosity of the negative electrode layer (1) gradually increases from the inner core to the outer surface of the negative electrode layer (1).

13. The secondary battery according to claim 8, wherein further comprises a housing in which the positive electrode layer (3), the negative electrode layer (1) and the insulating layer (2) are located.

14. The secondary battery according to claim 13, wherein the housing is a metal housing and an insulating lining layer is arranged on the inner wall of the housing.

15. The secondary battery according to claim 13, wherein the secondary battery further comprises a positive electrode current collector terminal (5) and a negative electrode current collector terminal (4), and the positive electrode current collector terminal (5) is connected to the positive electrode current collector and leads to the outside of the housing, and the negative electrode current collector terminal (4) is connected to the negative electrode current collector and leads to the outside of the housing.

16. The secondary battery according to claim 1, wherein the secondary battery is a lithium-ion battery or a sodium-ion battery.

FIG. 1

## INTERNATIONAL SEARCH REPORT

| | International application No. |
|---|---|
| | **PCT/CN2023/120064** |

**A. CLASSIFICATION OF SUBJECT MATTER**

H01M10/0585(2010.01)i;  H01M10/0525(2010.01)i;  H01M10/054(2010.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, VEN, DWPI: BYD, battery, positive w electrode, negative w electrode, insulat+ w layer, thickness, impedance, 20, 100, 5, 150, 20-100, 5-150, mm, cm, 电池, 正极, 负极, 绝缘层, 厚度, 阻抗, 内阻, 毫米, 厘米, 比亚迪

**C. DOCUMENTS CONSIDERED TO BE RELEVANT**

| Category* | Citation of document, with indication, where appropriate, of the relevant passages | Relevant to claim No. |
|---|---|---|
| PX | CN 219180585 U (BYD CO., LTD.) 13 June 2023 (2023-06-13)<br>claims 1-16 | 1-16 |
| X | CN 110994033 A (LIVING POWER NEW ENERGY TECHNOLOGY (SHANGHAI) CO., LTD. et al.) 10 April 2020 (2020-04-10)<br>description, paragraphs 26-45 | 1-16 |
| X | CN 217134409 U (BYD CO., LTD.) 05 August 2022 (2022-08-05)<br>claims 1-10 | 1-16 |
| A | WO 2005013408 A1 (NEC LAMILION ENERGY LTD. et al.) 10 February 2005 (2005-02-10)<br>embodiments, and comparative examples 1-3 | 1-16 |
| A | US 2016064715 A1 (NISSAN MOTOR CO., LTD. et al.) 03 March 2016 (2016-03-03)<br>embodiments 1-7 | 1-16 |
| A | JP 2019102428 A (NINGDE CONTEMPORARY AMPEREX TECHNOLOGY LTD.) 24 June 2019 (2019-06-24)<br>claims 1-10 | 1-16 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **03 November 2023** | **10 November 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/120064**

| Patent document cited in search report | | | Publication date (day/month/year) | Patent family member(s) | | | Publication date (day/month/year) |
|---|---|---|---|---|---|---|---|
| CN | 219180585 | U | 13 June 2023 | None | | | |
| CN | 110994033 | A | 10 April 2020 | CN | 210897515 | U | 30 June 2020 |
| CN | 217134409 | U | 05 August 2022 | None | | | |
| WO | 2005013408 | A1 | 10 February 2005 | US | 2006188777 | A1 | 24 August 2006 |
| | | | | EP | 1655797 | A1 | 10 May 2006 |
| | | | | EP | 1655797 | A4 | 12 November 2008 |
| | | | | EP | 1655797 | B1 | 18 October 2023 |
| | | | | KR | 20060039010 | A | 04 May 2006 |
| | | | | KR | 100727201 | B1 | 13 June 2007 |
| | | | | JPWO | 2005013408 | A1 | 27 September 2007 |
| | | | | JP | 4605389 | B2 | 05 January 2011 |
| US | 2016064715 | A1 | 03 March 2016 | JP | 6076464 | B2 | 08 February 2017 |
| | | | | JPWO | 2014157421 | A1 | 16 February 2017 |
| | | | | KR | 20150123897 | A | 04 November 2015 |
| | | | | KR | 101760198 | B1 | 20 July 2017 |
| | | | | EP | 2980911 | A1 | 03 February 2016 |
| | | | | EP | 2980911 | A4 | 18 January 2017 |
| | | | | EP | 2980911 | B1 | 06 June 2018 |
| | | | | WO | 2014157421 | A1 | 02 October 2014 |
| JP | 2019102428 | A | 24 June 2019 | US | 2019173088 | A1 | 06 June 2019 |
| | | | | US | 10658673 | B2 | 19 May 2020 |
| | | | | EP | 4216320 | A2 | 26 July 2023 |
| | | | | EP | 3496191 | A1 | 12 June 2019 |
| | | | | EP | 3496191 | B1 | 01 March 2023 |
| | | | | JP | 6831815 | B2 | 17 February 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202223577445